Europäisches Patentamt

European Patent Office

Office européen des brevets

(11) Numéro de publication: **0 370 906**
**A1**

## (12) DEMANDE DE BREVET EUROPEEN

(21) Numéro de dépôt: **89403230.9**

(51) Int. Cl.5: **G05B 19/405**

(22) Date de dépôt: **22.11.89**

(30) Priorité: **24.11.88 FR 8815342**

(43) Date de publication de la demande:
**30.05.90 Bulletin 90/22**

(84) Etats contractants désignés:
**BE DE ES GB IT NL SE**

(71) Demandeur: **AEROSPATIALE Société
Nationale Industrielle
37, Boulevard de Montmorency
F-75781 Paris Cédex 16(FR)**

(72) Inventeur: **Piskorski, Richard
Route de Senlis Millencourt
F-80300 Albert(FR)**

(74) Mandataire: **Mongrédien, André et al
c/o SOCIETE DE PROTECTION DES
INVENTIONS 25, rue de Ponthieu
F-75008 Paris(FR)**

(54) Procédé automatique d'analyse de signaux dans un système asservi industriel et dispositif de mise en oeuvre du procédé.

(57) Procédé d'analyse automatique de signaux dans un système asservi industriel et dispositif de mise en oeuvre du procédé, le procédé consistant à analyser automatiquement des signaux caractéristiques tels que des signaux de retour de boucle ou l'intensité du courant moteur de la chaîne directe de l'asservissement en procédant à l'injection cyclique en entrée du système d'un signal prédéterminé e(t); à l'enregistrement à la suite de ces injections de signaux de référence lors d'une phase initiale durant laquelle le fonctionnement est réputé correct à l'enregistrement de la réponse du système à des simulations de pannes ; à l'enregistrement de signaux caractéristiques du système lors de phases de contrôles automatiques consécutives à des cycles d'injection de signal ; à l'analyse des signaux caractéristiques par comparaison aux signaux de référence puis aux réponses à des simulations de pannes ; et en cas de début de panne, à la signalisation d'une anomalie du fonctionnement et à la détermination de cette anomalie.

Application à l'analyse automatique des automatismes des machines à commandes numériques et des robots.

FIG. 3

# PROCEDE AUTOMATIQUE D'ANALYSE DE SIGNAUX DANS UN SYSTEME ASSERVI INDUSTRIEL ET DISPOSITIF DE MISE EN OEUVRE DU PROCEDE

L'invention concerne un procédé automatique d'analyse de signaux dans un système asservi industriel tel qu'une machine à commande numérique ou un robot. L'invention concerne également un dispositif de mise en oeuvre du procédé.

Un système industriel du type automatisme asservi est constitué généralement d'une chaîne d'asservissement d'ordre quelconque linéaire ou non avec une ou plusieurs boucles de retour. Il s'agit généralement d'asservissements de position et/ou de vitesse.

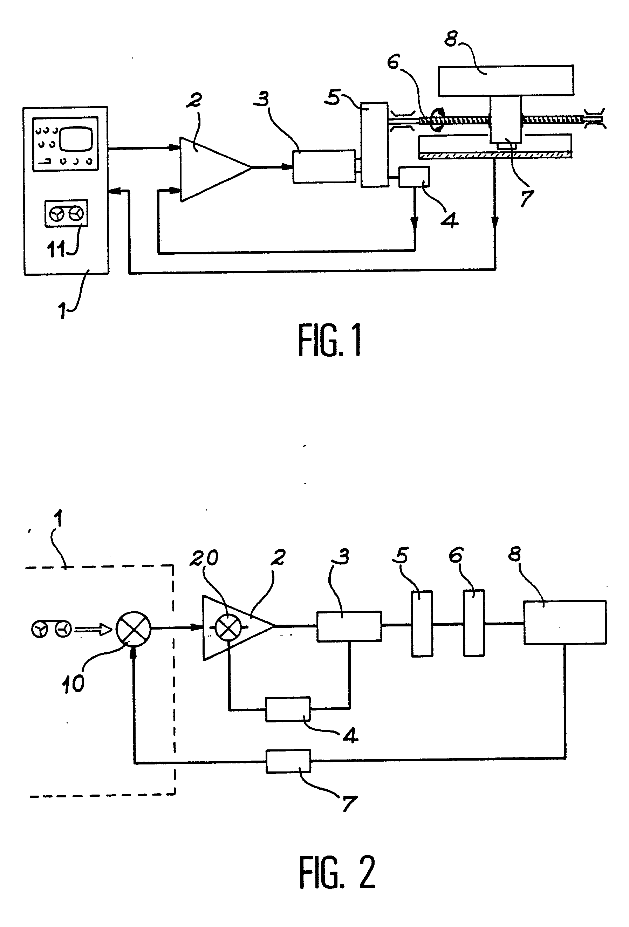

On a représenté à titre d'exmple, sur les figures 1 et 2, un système automatique asservi, industriel tel qu'une machine outil à commande numérique. Il s'agit d'un système asservi du premier ordre à deux boucles de retour, une boucle d'asservissement en position et une boucle d'asservissement en vitesse.

Ce système comprend de manière classique des moyens de commande numérique 1 susceptibles d'exécuter un programme de commande. Il comprend un amplificateur-variateur 2, un moteur 3, un capteur tachymétrique 4, une chaîne cinématique d'entraînement 5 et 6, un capteur de position 7 et l'élément mobile asservi 8.

La figure 2 permet de mieux mettre en évidence les deux boucles fermées d'asservissement en position et en vitesse.

Les moyens de commande numérique 1 comparent la position du mobile 8 donnée par le capteur 7 à celle qu'elle génère à partir des instructions qui lui sont communiquées par son programme 11. La différence entre les deux, nommée "erreur de poursuite $\epsilon$" génère une tension de référence vitesse proportionnelle à l'erreur $\epsilon$ soit k $\epsilon$ , transmise au comparateur 20 de l'amplificateur variateur 2. Cet amplificateur variateur 2 commande le moteur 3 qui entraîne le mobile 8 par l'intermédiaire de la chaîne cinématique 5 et 6. La vitesse du moteur est transmise du capteur tachymétrique au comparateur 20 de référence vitesse.

La vérification du fonctionnement de tels systèmes, a jusqu'à présent consisté à effectuer manuellement et ponctuellement à l'aide d'instruments adaptés le contrôle des signaux émis par les capteurs des boucles d'asservissement vitesse et/ou position, ainsi que pour toute autre grandeur physique reflétant la qualité de fonctionnement du système asservi.

Ces contrôles ne permettent que généralement trop tard, de constater que le système ne fonctionne pas dans de bonnes conditions, d'où la nécessité de rejeter le travail effectué (par exemple les pièces usinées par le mobile).

Une intervention humaine est donc nécessaire d'une part pour effectuer les contrôles de fonctionnement et d'autre part lorsqu'une anomalie de fonctionnement est constatée afin d'en déterminer la nature d'où une perte de temps considérable dans l'exécution du travail.

La présente invention permet de remédier à ces problèmes en automatisant les contrôles de tels systèmes et cela en effectuant une analyse automatique de signaux du système après injection cyclique d'un signal prédéterminé en entrée du système, dans une zone de fonctionnement où ledit signal n'apportera pas de perturbation anormale en regard de la mission du système (en dehors des zones "copeaux" pour une machine-outil à commandes numériques par exemple).

Le contrôle selon le procédé conforme à l'invention consiste à effectuer une analyse automatique des réponses harmoniques de tout système asservi industriel et également de tous autres signaux caractéristiques dans ces systèmes tels que l'intensité du courant moteur, du moteur de la chaîne d'entraînement.

Le procédé et le dispositif de mise en oeuvre du procédé conformes à l'invention permettent de détecter par le fait de l'automatisation des contrôles de façon cyclique, au plus tôt toute variation anormale de la fonction de transfert qui caractérise le système ou de toute autre grandeur physique en reflétant la qualité de fonctionnement afin d'en conclure :

- dans un premier temps, qu'il y a dégradation du fonctionnement de l'asservissement, donc probablement une panne naissante le procédé ayant une fonction alarme outre la fonction détection ;
- dans un deuxième temps, l'origine probable de l'anomalie à partir de la nature de la variation de la fonction de transfert ou de toute autre caractéristique du système, le procédé comportant une fonction diagnostic de panne.

La présente invention a donc pour objet un procédé d'analyse de signaux dans un système asservi industriel comportant une chaîne directe avec une ou plusieurs boucles de retour, principalement caractérisé en ce qu'il consiste, automatiquement, à :

- injecter cycliquement en entrée du système un signal prédéterminé e(t),
- effectuer, lors d'une phase initiale de fonctionnement, consécutivement à un ou plusieurs cycles d'injection, la mesure d'au moins un signal de référence du système, et à mémoriser ce signal,
- effectuer, lors d'une phase de contrôle automatique, consécutivement à chaque cycle d'injection, la mesure de signaux caractéristiques du système,
- effectuer un traitement sur les signaux mesurés pour comparer les signaux caractéristiques aux signaux de référence,
- signaler, par un signal fonction du résultat de comparaison, l'apparition d'une anomalie de fonctionnement du système.

Selon un aspect de l'invention, le traitement consiste à échantillonner les signaux.

Selon un autre aspect de l'invention conforme à un premier mode de réalisation, le signal prédéterminé $e(t)$ est constitué d'un ou plusieurs échelons.

Selon un deuxième mode de réalisation, le signal prédéterminé $e(t)$ est un signal sinusoidal modulé en fréquence, en continu ou en paliers, dans la bande passante du système asservi.

Selon un mode de réalisation préféré, le procédé consiste :
lors de la phase initiale,
- à mesurer n fois un signal de référence choisi, chaque mesure étant consécutive à l'injection du signal prédéterminé,
lors de la phase contrôle automatique,
- à mesurer p fois un signal caractéristique, chaque mesure étant consécutive à l'injection du signal prédéterminé,
le traitement consiste alors,
- à déterminer m éléments représentatifs de chaque signal de référence,
- à déterminer m éléments représentatifs de chaque signal caractéristique,
- à déterminer une valeur moyenne Vcj, ($j = 0$ à m) pour chaque élément représentatif des signaux de référence de sorte que :

$$Vcj = \frac{\sum_{i=0}^{n} Vij}{n}$$

Vij étant la valeur d'un élément représentatif j d'un signal i de référence,
- à comparer chaque valeur Vkj, $k = 0$ à p d'un élément représentatif j d'un signal caractéristique k à la valeur moyenne de référence correspondante Vcj.

De manière préférée, la comparaison consiste à :
- déterminer l'écart type de référence $\sigma_0$ tel que :

$$\sigma_0 = \left[ \frac{\sum_{i=0}^{n} (Vij - Vcj)}{n} \right]^{1/2}$$

- déterminer l'écart type $\sigma_0$ tel que :

$$\sigma = \left[ \frac{\sum_{k=0}^{p} (Vkj - Vcj)}{p} \right]^{1/2}$$

- définir le domaine d'évolution des points caractéristiques du signal de référence choisi par les bornes inférieures et supérieures telles que :

3

$$Di \begin{cases} \text{borne inférieure} = Vcj - \sigma_0 \\ \text{borne supérieure} = Vcj + \sigma_0 \end{cases}$$

le domaine caractéristique $D_k$ étant défini par ses bornes inférieures et supérieures telles que :

$$Dk \begin{cases} \text{borne inférieure} = Vkj - \sigma \\ \text{borne supérieure} = Vkj + \sigma \end{cases}$$

- définir une zone d'évolution anormale Za, telle que :

Za = [Di U Dk] - [ Di] associée à la condition :

[Di U Dk] > [ Di]

- comparer Za à Di,z

- signaler par l'émission d'un signal d'alarme une anomalie de fonctionnement lorsque la valeur de la zone anormale d'évolution Za, rapportée à la zone de référence Di dépasse une valeur critique de x%.

Selon un autre aspect de l'invention, le procédé consiste en outre à :

- effectuer, lors d'une phase de simulation consécutive à la phase initiale, une simulation de pannes et une injection du signal prédéterminé, en entrée du système,

- relever et enregistrer chaque élément caractéristique représentatif du système pour chaque panne simulée,

- relever et enregistrer chaque élément caractéristique représentatif du système en cours de phase de contrôle de fonctionnement,

- comparer chaque élément caractéristique du système enregistré en cours de phase de contrôle à chaque élément caractéristique du système enregistré en cours de phase de simulation lorsqu'une anomalie de fonctionnement est signalée,

- déterminer la nature de l'anomalie de fonctionnement.

Selon un premier mode de réalisation, l'analyse porte sur des signaux mesurés qui sont des signaux de réponse du système asservi, ces signaux étant traités directement,

Selon un deuxième mode de réalisation, l'analyse porte sur des signaux mesurés qui sont des signaux de réponse du système asservi, le traitement consistant en premier lieu à transformer ces signaux en lieu de Bode ou de Nyquist ou de Black.

Selon un troisième mode de réalisation, l'analyse porte sur des signaux mesurés qui sont des signaux de réponse du système asservi, le traitement consistant en premier lieu à transformer ces signaux pour présenter la réponse du système sous forme de transformée de Laplace et ensuite à déterminer les coefficients de cette transformée.

Selon un quatrième mode de réalisation, l'analyse porte sur des signaux mesurés qui sont des signaux caractéristiques d'un élément placé dans la chaîne directe du système.

Lorsque le système comporte dans la chaîne directe un moteur d'entraînement, le signal caractéristique mesuré est l'intensité du courant moteur.

La présente invention a également pour objet un dispositif d'analyse de signaux dans un système automatique asservi comportant une chaîne directe et une ou plusieurs boucles de retour, principalement caractérisé en ce qu'il comporte :

- des moyens de commande délivrant des signaux de commande d'entrée du système et un signal d'horloge.

- des moyens de traitement comprenant un processeur,

- des moyens de signalisation.

Les moyens de traitement comportent en outre :

- des moyens de mémorisation,

- un convertisseur analogique-numérique,

- une interface de mise en forme des signaux.

Selon un mode de réalisation particulier, les moyens de traitement sont aptes à générer le signal prédéterminé e(t) en synchronisme avec le signal d'horloge.

Selon un autre mode de réalisation, le dispositif comporte en outre un générateur de fonction apte à générer le signal prédéterminé e(t) en synchronisme avec le signal d'horloge.

D'autres caractéristiques et avantages de l'invention apparaîtront à la lecture de la description détaillée qui suit et qui est faite en référence aux dessins annexés dans lesquels :

EP 0 370 906 A1

- la figure 1 représente le schéma d'un système automatique asservi tel qu'une machine à commande numérique selon l'art antérieur,

- la figure 2 représente un schéma d'un système tel que celui de la figure 1 mettant en évidence deux boucles d'asservissement, selon l'art antérieur,

- la figure 3 représente le schéma d'un système asservi muni d'un dispositif d'analyse de signaux selon l'invention, et

- la figure 4 illustre une représentation schématique des domaines Di et Dk.

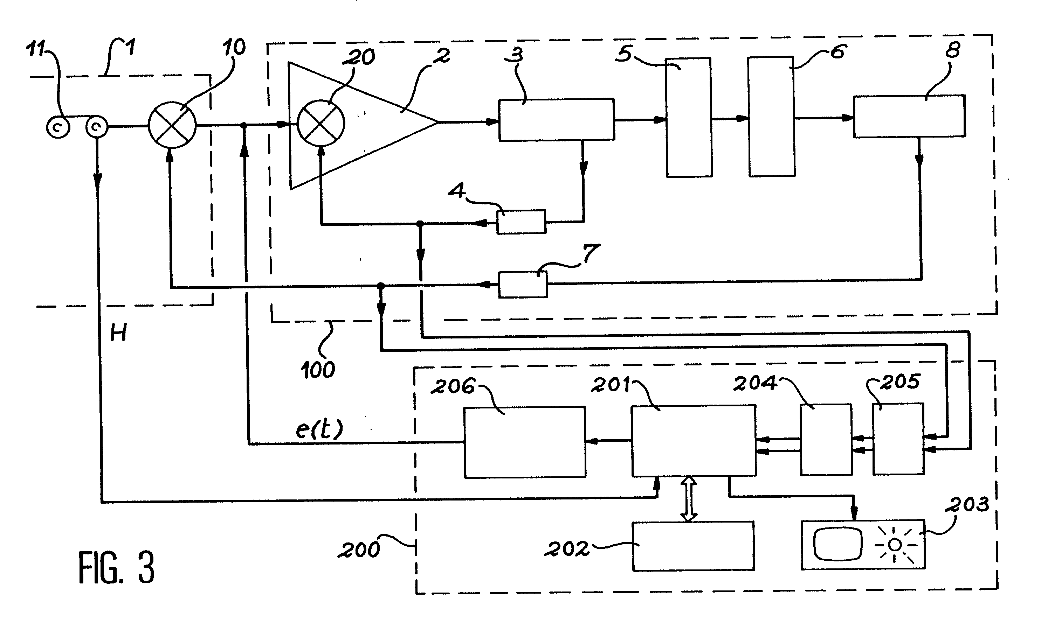

La figure 3 représente le schéma donné à titre d'exemple d'un système automatique asservi tel que ceux représentés sur les figures 1 et 2 mais qui est par contre muni d'un dispositif d'analyse automatique conforme à l'invention 200.

Ce dispositif comporte des moyens de traitement de signaux munis d'un processeur 201 et de moyens de mémorisation 202 par exemple une mémoire RAM. Il peut s'agir d'un micro-ordinateur COMPAQ mod 2 avec coprocesseur 80287 de Tektronix apte à exécuter le procédé chargé sous forme de programme dans la mémoire principale.

Le dispositif comporte également des moyens de signalisation 203 par exemple une alarme sonore et/ou un écran vidéo.

Les moyens de traitement comportent en outre un convertisseur analogique-numérique 204 permettant de numériser les signaux, une horloge H et une interface de mise en forme des signaux 205. Selon un exemple de réalisation, les moyens de traitement sont à la fois aptes à délivrer le signal prédéterminé e(t) et à effectuer tous les traitements.

Selon un autre exemple de réalisation, le signal prédéterminé e(t) est délivré par un générateur de signal 206 tel qu'un appareil TBF Philips 5132.

Le procédé conforme à l'invention consiste à prédéterminer un signal e(t) susceptible de ne pas perturber le fonctionnement normal du système asservi, ledit signal n'apportant pas de perturbation anormale en regard de la mission du système (en dehors des zones "copeaux" pour une machine-outil à commandes numériques par exemple.

Ce signal e(t) est choisi de sorte qu'il recouvre un domaine de fréquences appartenant à la bande passante du système.

Ce signal est de préférence constitué soit par un ou plusieurs échelons de tension soit par un signal modulé en fréquence en continu ou par paliers, dans la bande passante du système.

Le procédé consiste en outre à injecter cycliquement ce signal prédéterminné e(t) en entrée du système au niveau par exemple des moyens de commande du système représenté sur la figure 3 dans le cas d'une machine outil à commandes numériques.

L'injection se fait avec des cycles qui ne sont pas obligatoirement réguliers mais, en tout cas dans une configuration du système constante, choisie en dehors des zones d'utilisation finale (hors production de copeaux pour une machine-outil).

Un top de synchronisation est chaque fois émis par les moyens de commande 1, pour que les moyens de traitement (ou le générateur) délivrent le signal.

Lors d'une phase initiale de fonctionnement, le système ayant un fonctionnement réputé correct, l'on procède consécutivement à un ou plusieurs cycles d'injection du signal e(t) à des mesures d'un ou plusieurs signaux de référence du système que l'on mémorise.

L'on procède donc dans le cas particulier décrit, à des mesures du signal de position et du signal vitesse en sortie du système et/ou de l'intensité du courant du moteur. De manière plus générale, l'on mesure le signal s(t) de référence réponse du système à un signal d'entrée e(t), ou le signal i(t) de référence de l'intensité du moteur.

Lors d'une phase de contrôle automatique, l'on mesure, consécutivement à un ou plusieurs cycles d'injection, des signaux caractéristiques du système.

Ces signaux caractéritiques sont, soit la réponse du système s(t) à une entrée e(t), soit également tout autre signal caractéritique tel que dans l'application décrite l'intensité du courant du moteur d'entraînement.

Les signaux mesurés sont traités. Ce traitement consiste notamment à effectuer une comparaison entre les signaux de référence de la phase initiale et les signaux mesurés, lors des contrôles automatiques afin de détecter l'apparition d'anomalies du fonctionnement.

Dès qu'une anomalie est détectée, un signal "alarme" est émis.

De manière préférée, le traitement se fait après échantillonnage des signaux mesurés avec une période d'échantillonnage choisie en fonction de la bande passante du système et préférentiellement égale à une dizaine de fois la fréquence haute de la bande passante.

Par ailleurs, la durée de mesure de chaque signal est choisie de manière à couvrir le temps d'extinction du régime transitoire.

5

Selon un exemple préféré de réalisation, l'on procède à n mesures consécutives chacune à une injection de signal pour établir n mesures du signal de référence et déterminer une valeur moyenne en chaque point (ou échantillon) des courbes représentatives de ces n signaux.

On choisit un nombre n>3 soit de l'ordre de 10 à titre d'exemple.

On procède de la même façon pour les signaux caractéristiques lors des phases de contrôle. Le nombre p de signaux mesurés après un cycle d'injection de signal peut être égal à n ou différent.

On détermine ensuite m éléments représentatifs pour chaque signal de référence et m éléments représentatifs pour chaque signal caractéristique. Les éléments représentatifs sont soit un point d'une courbe représentant le signal, soit plus précisément dans le cas d'un échantillonnage un échantillon du signal.

On détermine, comme cela vient d'être décrit, une valeur moyenne Vcj pour chaque point j (échantillon) j variant de 0 à m, m étant le nombre de points (ou échantillon) analysé d'un signal mesuré pendant la durée de la mesure.

Ainsi, la valeur moyenne pour un point j soit Vcj est égale à :

$$\frac{\sum_{i=0}^{n} Vij}{n} ,$$

Vij étant la valeur d'un élément représentatif j d'un signal i de référence, chaque valeur Vkj d'un point j (ou échantillon) k variant de 0 à p (p étant le nombre de signaux mesurés, j étant le nombre de points analysés) est comparée à la valeur moyenne de référence correspondante Vcj.

Lorsque ces valeurs s'écartent de ces valeurs moyennes d'une quantité prédéterminée, il y a détection d'une anomalie.

De façon préférentielle, on détermine l'écart type $\sigma_0$ de référence tel que :

$$\sigma_0 = \left[ \frac{\sum_{i=0}^{n} (Vij-Vcj)}{n} \right]^{1/2}$$

de même que l'écart type $\sigma$ tel que :

$$\sigma = \left[ \frac{\sum_{k=0}^{p} (Vkj-Vcj)}{p} \right]^{1/2}$$

- on définit ensuite le domaine d'évolution des points caractéristiques du signal de référence choisi par les bornes inférieures et supérieures telles que :

$$Di \begin{cases} \text{borne inférieure} = Vcj - \sigma_0 \\ \text{borne supérieure} = Vcj + \sigma_0 \end{cases}$$

le domaine caractéristique Dk étant défini par ses bornes inférieures et supérieures telles que :

6

$$Dk \begin{cases} borne\ inférieure\ =\ Vkj\ -\ \sigma \\ borne\ supérieure\ =\ Vkj\ +\ \sigma \end{cases}$$

- on définit une zone d'évolution anormale Za, telle que :

Za = [Di U Dk] - [ Di] associée à la condition :

[Di U Dk] > [Di]

- on compare Za à Di,
- puis on signale par l'émission d'un signal d'alarme une anomalie de fonctionnement lorsque la valeur de la zone anormale d'évolution Za, rapportée à la zone de référence Di dépasse une valeur critique de x%, x étant prédéterminé (quelques pour-cent par exemple).

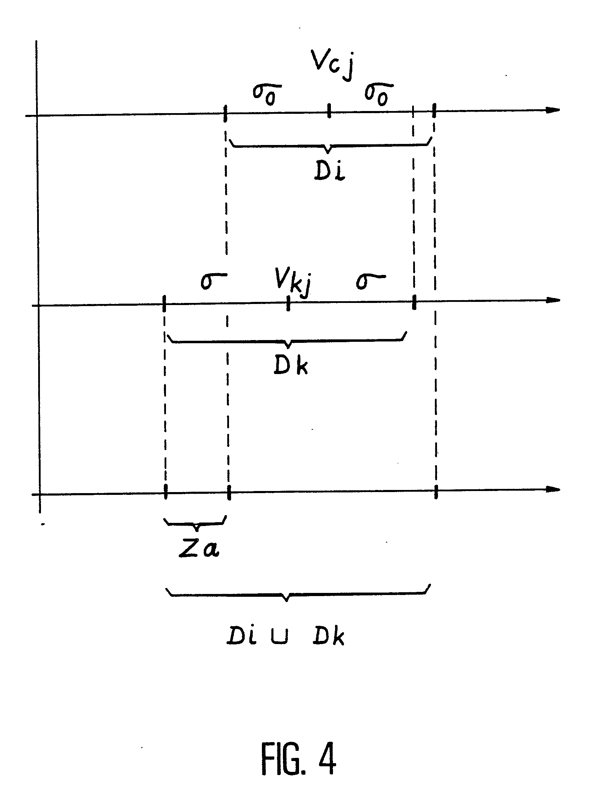

On a effectué à titre illustratif une représentation schématique des domaines ainsi définis Di et Dk. Cette représentation correspond au schéma de la figure 4.

On rappelle que le symbole "U" est la fonction "union".

La zone Za est formée par conséquent de la réunion des domaines Di et Dk auxquels on retire le domaine Di.

Dans ce cas particulier les domaines sont délimités par des bornes inférieures et supérieures. Toutes les valeurs comprises entre ces bornes appartiennent au domaine considéré.

La zone Za n'est formée que dans la mesure où la réunion des domaines Di et Dk est supérieure au domaine Di.

Selon un autre aspect de l'invention, le procédé comporte une fonction apprentissage consistant à insérer une phase de simulation entre la phase initiale et la phase de contrôle.

La phase de simulation consiste à simuler un ensemble de pannes classiques provoquant un comportement déterminé se traduisant par une réponse bien définie au signal prédéterminé e(t).

On procède par conséquent à un enregistrement de toutes les réponses à l'injection du signal e(t) pour chaque panne simulée.

La simulation de chaque panne proprement dite se fait selon des méthodes classiques dans le domaine de la simulation au moyen par exemple de programmes de simulation que l'on adapte aux caractéristiques bien définies relatives à chaque panne.

Lorsqu'à la suite d'une phase de contrôle, un début d'anomalie de fonctionnement est détecté, on procède à la détermination de la nature de l'anomalie par comparaison de la réponse du système aux réponses enregistrées en phase de simulation.

Ainsi, l'on procède à une comparaison des éléments caractéristiques du système en phase de simulation aux éléments caractéristiques du système en phase de contrôle.

Ces éléments caractéristiques sont comme précédemment soit le signal de réponse s(t) au système, soit ce signal transformé sous la forme de lieu de Bode ou de Nyquist ou de Black soit les paramètres de la fonction de transfert du système. Il peut s'agir également d'un signal tel que l'intensité du moteur d'entraînement.

Le traitement peut consister à des comparaisons de fonctions de transfert dans le cas où le signal est transformé sous la forme de transformée de Laplace :

$$H(p) = \frac{S(p)}{E(p)}\ ,\quad \frac{Entrée}{Sortie}$$

Dans le cas d'un système linéaire, la fonction de transfert correspond au produit des fonctions de transfert de chaque élément ou sous-ensemble du système. On va enregistrer par conséquent une fois pour toutes la variation de la fonction de transfert d'un sous-ensemble donné pour une panne caractéristique, ce qui permet de déduire la variation totale du système complet. Cette variation permet lors des phases contrôles automatiques de comparer la fonction de transfert à celle qui a été enregistrée et d'en déduire la nature de la panne à partir de la variation obtenue.

Dans le cas de systèmes non linéaires, les calculs sont faits à partir des matrices de transfert mais le principe est le même.

Le dispositif d'analyse représenté sur la figure 3 permet de mettre en oeuvre le procédé.

Le processeur est programmé à cette fin et en fonction de la ou des variantes de réalisation qui ont été décrites.

Les opérations d'enregistrement et de lecture de signaux sont séquencées par le processeur de manière tout à fait classique par des ordres de lecture/écriture d'une mémoire RAM interne ou non du processeur.

## Revendications

1. Procédé d'analyse de signaux dans un système asservi industriel comportant une chaîne directe avec une ou plusieurs boucles de retour, caractérisé en ce qu'il consiste, automatiquement, à :
- injecter cycliquement en entrée du système un signal prédéterminé e(t),
- effectuer, lors d'une phase initiale de fonctionnement, consécutivement à un ou plusieurs cycles d'injection, la mesure d'au moins un signal de référence du système, et à mémoriser ce signal,
- effectuer, lors d'une phase de contrôle automatique, consécutivement à chaque cycle d'injection, la mesure de signaux caractéristiques du système,
- effectuer un traitement sur les signaux mesurés pour comparer les signaux caractéristiques aux signaux de référence,
- signaler par un signal fonction du résultat de comparaison l'apparition d'une anomalie de fonctionnement du système.

2. Procédé d'analyse de signaux selon la revendication 1, caractérisé en ce que le traitement consiste à échantillonner les signaux.

3. Procédé d'analyse de signaux selon la revendication 1 ou 2, caractérisé en ce que le signal prédéterminé e(t) est constitué d'un ou plusieurs échelons.

4. Procédé d'analyse de signaux selon la revendication 1 ou 2, caractérisé en ce que le signal prédéterminé e(t) est un signal sinusoïdal modulé en fréquence, en continu ou en paliers, dans la bande passante du système asservi.

5. Procédé d'analyse de signaux selon l'une quelconque des revendications 1 à 3, caractérisé en ce que :
lors de la phase initiale,
- on mesure n signaux de référence, chaque mesure étant consécutive à l'injection du signal prédéterminé,
lors de la phase contrôle automatique,
- on mesure p signaux caractéristiques, chaque mesure étant consécutive à l'injection du signal prédéterminé,
le traitement consiste alors,
- à déterminer m éléments représentatifs de chaque signal de référence,
- à déterminer m éléments représentatifs de chaque signal caractéristique,
- à déterminer une valeur moyenne Vcj, ($j = 0$ à m) pour chaque élément représentatif des signaux de référence de sorte que :

$$Vcj = \frac{\sum_{i=0}^{n} Vij}{n}$$

Vij étant la valeur d'un élément représentatif j d'un signal i de référence,
- à comparer chaque valeur Vkj, $k = 0$ à p d'un élément représentatif j d'un signal caractéristique k à la valeur moyenne de référence correspondante Vcj.

6. Procédé d'analyse de signaux selon la revendication 5, caractérisé en ce que la comparaison consiste à :
- déterminer l'écart type de révérence $\sigma_0$ tel que :

$$\sigma_0 = \left[ \frac{\sum_{i=0}^{n} (Vij - Vcj)}{n} \right]^{1/2}$$

- déterminer l'écart type $\sigma$ tel que :

$$\sigma = \left[\frac{\sum_{k=0}^{p} (Vkj - Vcj)}{p}\right]^{1/2}$$

- définir le domaine d'évolution des points caractéristiques du signal de référence choisi par les bornes inférieures et supérieures telles que :

$$Di \begin{cases} \text{borne inférieure} = Vcj - \sigma_0 \\ \text{borne supérieure} = Vcj + \sigma_0 \end{cases}$$

le domaine caractéristique Dk étant défini par ses bornes inférieures et supérieures telles que :

$$Dk \begin{cases} \text{borne inférieure} = Vkj - \sigma \\ \text{borne supérieure} = Vkj + \sigma \end{cases}$$

- définir une zone d'évolution anormale Za, telle que :
Za = [Di U Dk ] - [Di] associée à la condition :
[Di U Dk ] > [Di]
- comparer Za à Di,
- signaler par l'émission d'un signal d'alarme une anomalie de fonctionnement lorsque la valeur de la zone anormale d'évolution Za, rapportée à la zone de référence Di dépasse une valeur critique de x%.

7. Procédé d'analyse de signaux selon l'une quelconque des revendications 1 à 6, caractérisé en ce qu'il consiste en outre à :
- effectuer, lors d'une phase de simulation consécutive à la phase initiale, une simulation de pannes et une injection du signal prédéterminé, en entrée du système,
- relever et enregistrer chaque élément caractéristique représentatif du système pour chaque panne simulée,
- relever et enregistrer ohaque élément caractéristique représentatif du système en cours de phase de contrôle de fonctionnement,
- comparer chaque élément caractéristique du système enregistré en cours de phase de contrôle à chaque élément caractéristique du système enregistré en cours de phase de simulation lorsqu'une anomalie de fonctionnement est signalée,
- déterminer la nature de l'anomalie de fonctionnement.

8. Procédé d'analyse de signaux selon l'une quelconque des revendications 1 à 7, caractérisé en ce que les signaux mesurés sont des signaux de réponse du système asservi, et en ce que ces signaux sont traités directement,

9. Procédé d'analyse de signaux selon l'une quelconque des revendications 1 à 7, caractérisé en ce que les signaux mesurés sont des signaux de réponse du système asservi, et en ce que le traitement consiste en premier lieu à transformer ces signaux en lieu de Bode ou de Nyquist ou de Black.

10. Procédé d'analyse de signaux selon l'une quelconque des revendications 1 à 7, caractérisé en ce que les signaux mesurés sont des signaux de réponse du système asservi, et en ce que le traitement consiste en premier lieu à transformer ces signaux pour présenter la réponse du système sous forme de transformée de Laplace et ensuite à déterminer les coefficients de cette transformée.

11. Procédé d'analyse de signaux selon l'une quelconque des revendications 1 à 7, caractérisé en ce que les signaux mesurés sont des signaux caractéristiques d'un élément placé dans la chaîne directe du système.

12. Procédé d'analyse de signaux selon la revendication 11, caractérisé en ce que le système comporte dans la chaîne directe un moteur d'entraînement, et en ce que le signal caractéristique mesuré est l'intensité du courant moteur.

13. Dispositif d'analyse de signaux dans un système automatique asservi comportant une chaîne directe et une ou plusieurs boucles de retour, principalement caractérisé en ce qu'il comporte :
- des moyens de commande (1) délivrant des signaux de commande d'entrée du système et un signal d'horloge (H).

- des moyens de traitement (201, 202, 204, 205) comprenant un processeur (201),
- des moyens de signalisation (203).

14. Dispositif d'analyse de signaux selon la revendication 13, caractérisé en ce que les moyens de traitement comportent en outre :

- des moyens de mémorisation (202),
- un convertisseur analogique-numérique (204),
- une interface de mise en forme des signaux (205).

15. Dispositif d'analyse de signaux selon les revendications 13 ou 14, caractérisé en ce que les moyens de traitement (201) sont aptes à générer le signal prédéterminé e(t) en synchronisme avec le signal d'horloge.

16. Dispositif d'analyse de signaux selon la revendication 13, caractérisé en ce qu'il comporte en outre un générateur de fonction (206) apte à générer le signal prédéterminé e(t) en synchronisme avec le signal d'horloge.

FIG. 1

FIG. 2

FIG. 3

EP 0 370 906 A1

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2588978 (WESTINGHOUSE ELECTRIC CORPORATION) <br> * page 4, ligne 25 - page 11, ligne 16; figures 1-3 * | 1-16 | G05B19/405 |
| A | GB-A-2142206 (UNITED KINGDOM ATOMIC ENERGY AUTHORITY) <br> * page 1, ligne 101 - page 4, ligne 87; figures 1-3 * | 1-16 | |
| A | GB-A-2196445 (JOHN JAMES SYLVESTER DERRY) <br> * le document en entier * | 1-16 | |
| A | JOURNAL OF THE INSTITUTION OF ELECTRONIC AND RADIO ENGINEERS. <br> no. 57, 1987, LONDON GB <br> pages 67 - 80; D. R. TOWILL: <br> "Automatic Testing of Control Systems - Past , Present , Future" <br> * page 69, colonne de gauche, alinéa 4 - page 79, colonne de gauche, alinéa 3; figures 3-20 * | 1-16 | |
| A | COMPUTERS IN INDUSTRY. <br> no. 1, février 1986, ELSEVIER NL. <br> pages 53 - 64; Laszlo MONOSTORI: <br> "Learning Procedures in Machine Tool Monitoring" <br> * le document en entier * | 1-16 | **DOMAINES TECHNIQUES RECHERCHES (Int. Cl.5 )** <br><br> G05B |

Le présent rapport a été établi pour toutes les revendications

| Lieu de la recherche | Date d'achèvement de la recherche | Examinateur |
|---|---|---|
| LA HAYE | 06 MARS 1990 | HAUSER L.E.R. |

EPO FORM 1503 03.82 (P0402)